# EUROPÄISCHE PATENTSCHRIFT

(11) **EP 0 951 430 B1**
(45) Veröffentlichungstag und Bekanntmachung des Hinweises auf die Patenterteilung: **05.09.2001**
(21) Anmeldenummer: 98905228.7
(22) Anmeldetag: 09.01.1998
(51) Int. Cl.: B65D 77/06, B65D 19/04, B29C 44/04, B29C 47/04

(54) **VORRICHTUNG ZUM SCHUTZ EINES GROSSVOLUMIGEN BEHÄLTERS UND VERFAHREN ZU IHRER HERSTELLUNG**
DEVICE FOR PROTECTING A LARGE-VOLUME RECEPTACLE AND METHOD FOR THE PRODUCTION THEREOF
DISPOSITIF POUR LA PROTECTION D'UN RECIPIENT D'UN GRAND VOLUME ET SON PROCEDE DE FABRICATION

(30) Priorität: 11.01.1997 DE 19700781
(43) Veröffentlichungstag der Anmeldung: 27.10.1999
(73) Patentinhaber: RICHTER, Günther, 57610 Altenkirchen (DE)
(72) Erfinder: RICHTER, Günther, 57610 Altenkirchen (DE)
(74) Vertreter: Kossobutzki, Walter, Dipl.-Ing.(FH)
(86) Internationale Anmeldenummer: DE9800058
(87) Internationale Veröffentlichungsnummer: WO9830466

(56) Entgegenhaltungen:
- DE-A- 2 638 238
- DE-U- 29 700 436
- US-A- 5 373 958
- US-A- 5 490 603

## Beschreibung

Die Erfindung bezieht sich auf eine Vorrichtung zum Schutz eines großvolumigen Behälters während der Lagerung und des Transportes von flüssigen, zähfließenden, pulverigen und körnigen Füllstoffen, bestehend aus einem palettenartigen, den Behälter an seiner Unterseite abstützenden Tragkörper und einem mit dem Tragkörper verbundenen und den Behälter seitlich umschließenden Mantelkörper sowie auf ein Verfahren zu ihrer Herstellung.

Zum Transport und zur Lagerung von flüssigen, zähfließenden, pulverigen und körnigen Füllstoffen werden großvolumige Behälter eingesetzt, die meist ein Fassungsvolumen von 500 bis 1000 Liter aufweisen und die aus Kunststoff im Blasverfahren hergestellt sind. Dabei besitzen diese Behälter eine obere, verschließbare Einfüllöffnung, während im Bereich des Bodens eine Auslaßöffnung mit einer Absperrarmatur angeordnet ist. Um einen solchen Behälter leicht und ohne Beschädigungen transportieren und lagern zu können, stützt sich derselbe mit seiner meist rechteckigen Grundfläche auf einem palettenartigen Tragkörper aus Holz, Metall oder Kunststoff ab, auf dem ein den Behälter seitlich umschließender Mantelkörper aus vertikalen und horizontalen, miteinander verschweißten Stäben aus Metall angeordnet ist. Ein metallischer Mantelkörper ist insbesondere in der chemischen Industrie und im Lebensmittelbereich nachteilig und daher unerwünscht. Bei einem solchen Palettencontainer wird die denselben sichernde und aus Tragkörper und Mantelkörper bestehende Vorrichtung als nachteilig angesehen, weil sie einerseits sehr aufwendig in ihrer Herstellung ist und andererseits immer die Gefahr besteht, daß sich der Mantelkörper von dem Tragkörper lösen kann. Darüber hinaus ist durch den gitterartigen Mantelkörper eine Beschädigung des Behälters nicht auszuschließen.

Der Erfindung liegt deshalb die Aufgabe zugrunde, eine Vorrichtung zum Schutz eines großvolumigen Behälters zum Transport und zur Lagerung von flüssigen, zähfließenden, pulverigen und körnigen Füllstoffen zu schaffen, die leicht und preiswert hergestellt werden kann, die weitgehend chemisch rostfrei ist und bei der nicht die Gefahr besteht, daß sich der Mantelkörper vom Tragkörper lösen kann. Darüber hinaus soll die Vorrichtung ein besonders gutes optisches Aussehen besitzen und einen besseren Schutz des Behälters bilden.

Zur Lösung dieser Aufgabe wird gemäß der Erfindung bei einer Vorrichtung der eingangs beschriebenen Gattung vorgeschlagen, daß der Tragkörper und der Mantelkörper einstückig aus Kunststoff mit einer dreischichtigen, aus einer kompakten Außenschicht, einer kompakten Innenschicht und einer geschäumten Zwischenschicht bestehenden Wandung gebildet sind.

Eine derartig ausgestaltete Vorrichtung ist verhältnismäßig rasch und preiswert herstellbar. Sie verleiht dem darin angeordneten Behälter eine besonders hohe Sicherheit und besitzt ein gutes optisches Aussehen. Die Gefahr, daß sich der Mantelkörper von dem Tragkörper trennen kann, ist ausgeschlossen. Das Gewicht einer solchen Vorrichtung ist verhältnismäßig gering.

Weitere Merkmale einer erfindungsgemäßen Vorrichtung sowie eines Verfahrens zu ihrer Herstellung sind in den Ansprüchen 2 bis 11 offenbart.

Die Erfindung wird nachfolgend anhand eines in einer Zeichnung dargestellten Ausführungsbeispieles näher erläutert. Dabei zeigen
- Fig. 1: eine Aufrißdarstellung einer Vorrichtung gemäß der Erfindung mit einem eingesetzten Behälter,
- Fig. 2 bis 9: eine Anlage zur Herstellung der Vorrichtung der Fig.1 in den einzelnen Stufen des Verfahrens,
- Fig. 10a: einen Schnitt durch die Wandung der Vorrichtung der Fig. 1,
- Fig. 10b+10c: die Ausbildung unterschiedlicher Dicken der Schichten der Wandung eines schlauchartigen Vorformlings,
- Fig. 10d+10e: die Wandung einer Vorrichtung aus den Vorformlingen der Fig. 10b und 10c,
- Fig. 10f: einen Schnitt durch die Wandung der Vorrichtung der Fig. 1 im Bereich eines Sichtstreifens.

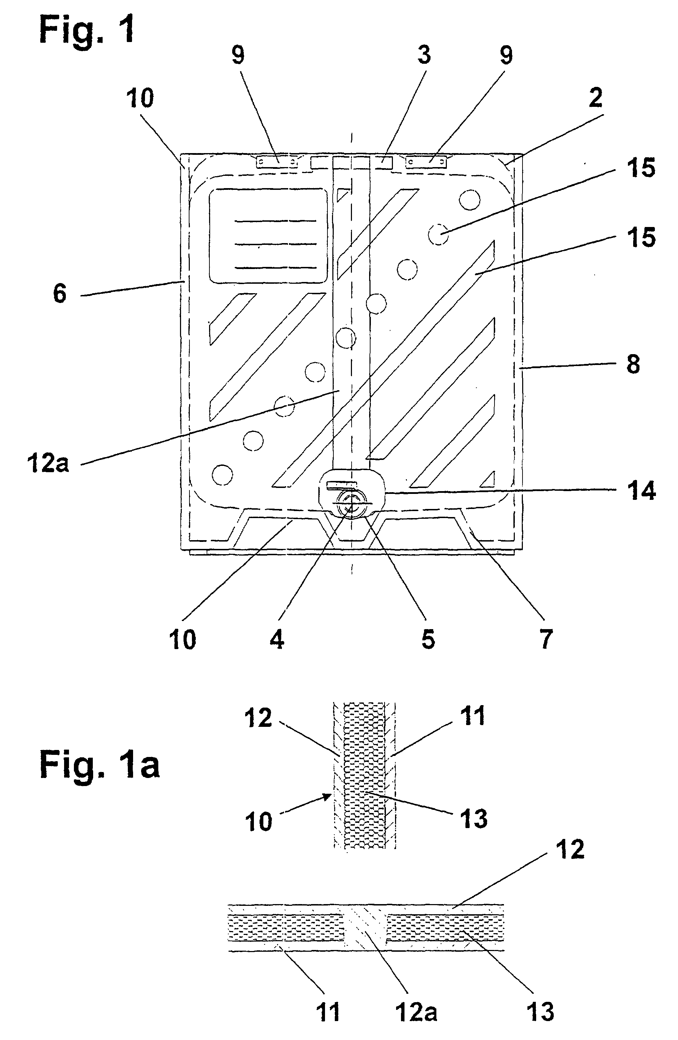

In der Fig. 1 der Zeichnung ist ein Palettencontainer 1 gezeigt, der einerseits aus einem Behälter 2 aus Kunststoff besteht, der ein flüssiges, zähfließendes, pulveriges oder körniges Medium, den sogenannten Füllstoff, aufnimmt. Dieser Behälter 2 ist mit einer nur angedeuteten, verschließbaren Einfüllöffnung 3 versehen, die sich im oberen Bereich des Behälters 2 befindet. In seinem unteren Bereich weist der Behälter 2 eine Auslaßöffnung 4 auf, in die ein Absperrventil 5 eingesetzt ist. Der Behälter 2 ist nun in einer erfindungsgemäßen Vorrichtung 6 untergebracht, die ihn beim Transport und bei der Lagerung sichert.

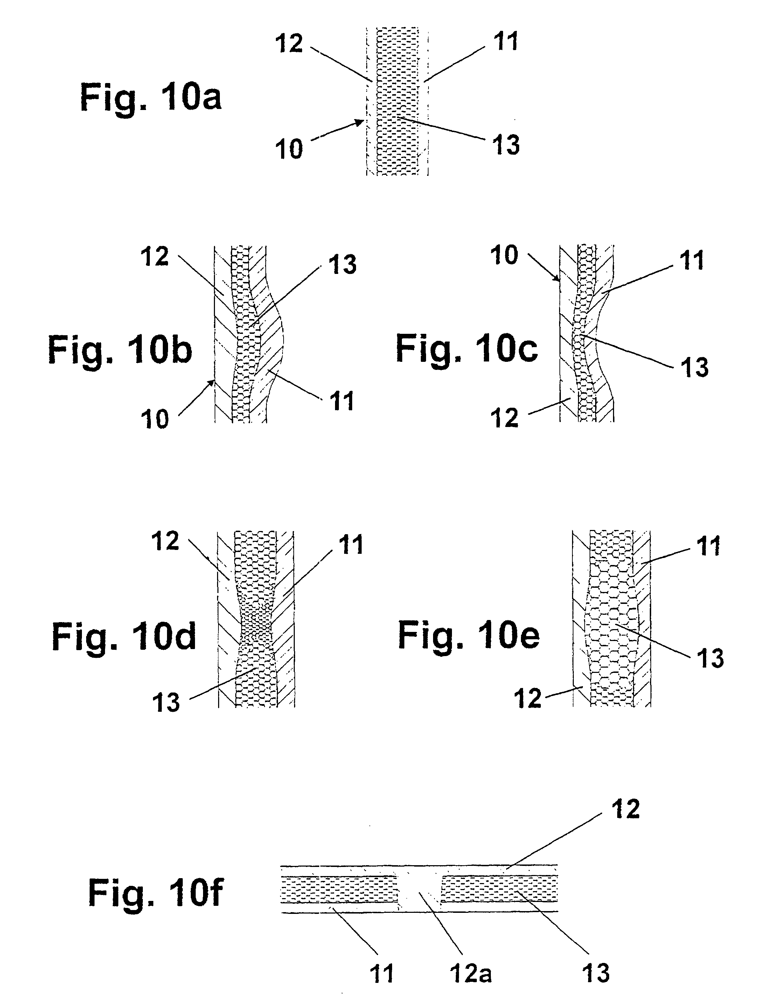

Diese Vorrichtung 6 besteht aus einem palettenartigen Tragkörper 7, auf dem sich der Behälter 2 abstützt. An den Tragkörper 7 schließt sich ein einstückig mit demselben gefertigter Mantelkörper 8 an, der den Behälter 2 seitlich umschließt. Mittels besonderer Abdeckelemente, die in der Fig. 1 der Zeichnung nicht näher dargestellt und mittels nur angedeuteter Klemmbügel 9 im oberen Bereich der Wandung 10 des Mantelkörpers 8 gehalten sind, ist der Behälter 2 in der Vorrichtung 6 gesichert. Die Wandung 10 des Mantelkörpers 8, aber auch die Wandung des Tragkörpers 7 ist dreischichtig ausgebildet und besteht aus einer kompakten Außenschicht 11 aus eingefärbtem und meist UV-beständigem Kunststoff (Fig. 10a). Ferner weist die Wandung 10 von Mantelkörper 8 und Tragkörper 7 eine mit Abstand von der Außenschicht 11 befindliche, ebenfalls kompakte Innenschicht 12 aus Kunststoff auf, der beispielsweise durchscheinend ausgebildet sein kann. Dabei ist die Innenschicht 12 von der Außenschicht 11 durch eine Zwischenschicht 13 getrennt, die aus geschäumtem Kunststoff besteht. Durch diese Zwischenschicht 13 wird eine äußerst stabile Vorrichtung 6 mit verhältnismäßig geringem Gewicht erreicht.

Im dargestellten Ausführungsbeispiel weist der Mantelkörper 8 eine Öffnung 14 auf, durch die das Absperrventil 5 ragt, so daß eine problemlose Entleerung des Behälters 2 möglich ist. Zusätzlich kann die Außenfläche des Mantelkörpers 2, wie Fig. 1 angedeutet, mit Ein- bzw. Ausprägungen 15 versehen sein. Die aus geschäumtem Kunststoff gebildete Zwischenschicht 13 kann bedarfsweise in unterschiedlichen Bereichen eine unterschiedliche Dichte aufweisen, was problemlos bei der Herstellung der Vorrichtung 6 bzw. des Vorformlings erreicht werden kann. Hier ist es lediglich notwendig, die einzelnen Schichten 11,12,13 mit unterschiedlichen Dicken zu extrudieren. Als Werkstoff für die Vorrichtung 6 kann beispielsweise kompaktes und mit einem Schäummittel versehenes Polyethylen verwendet werden.

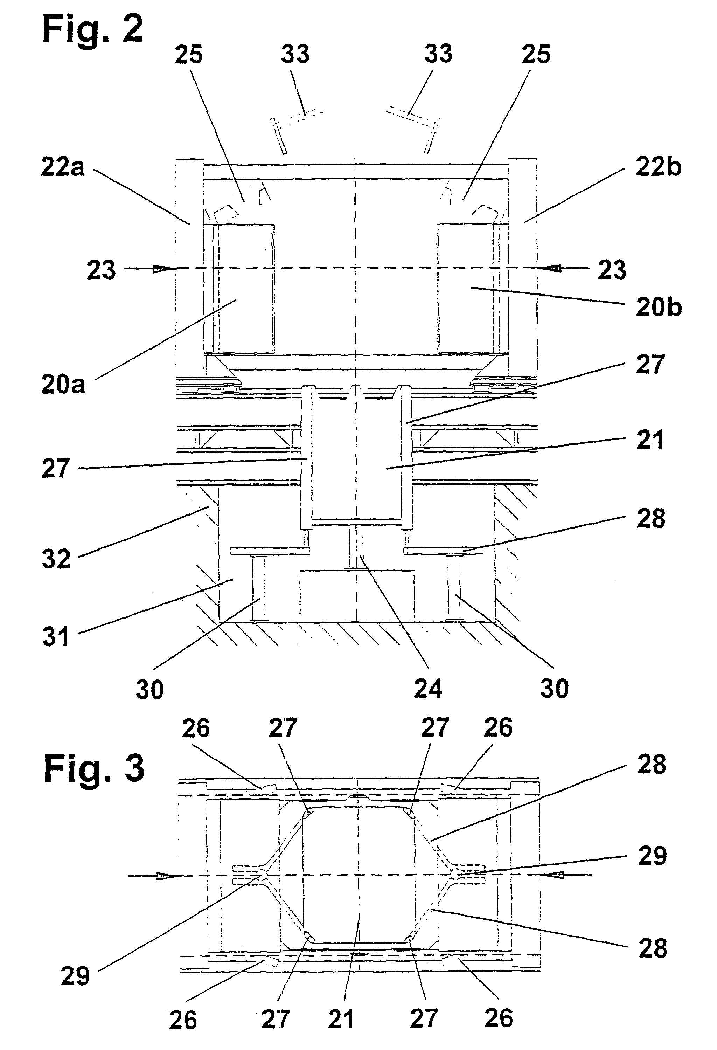

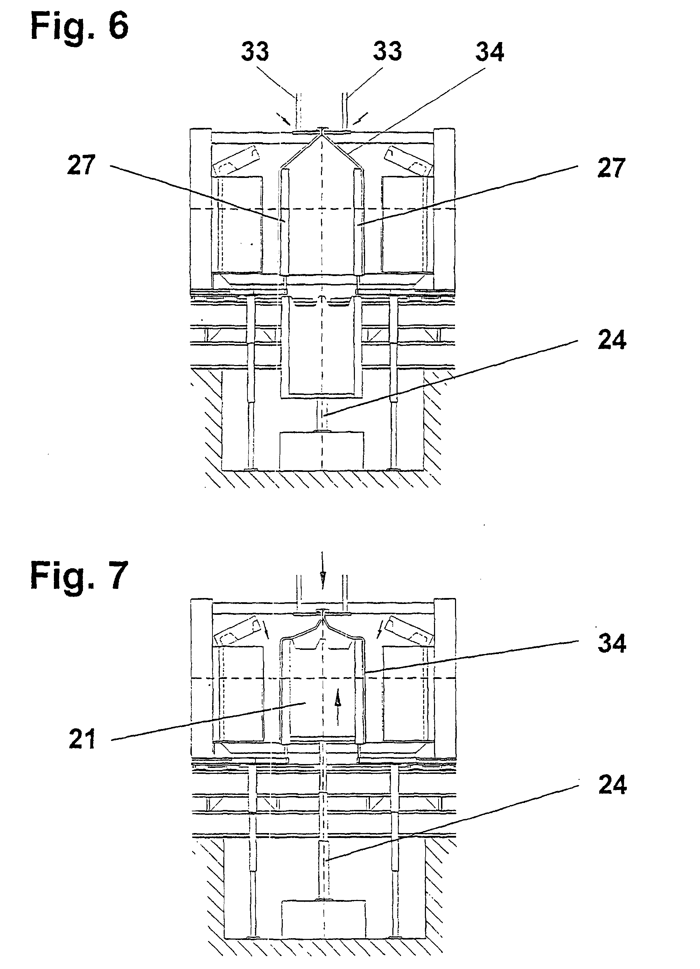

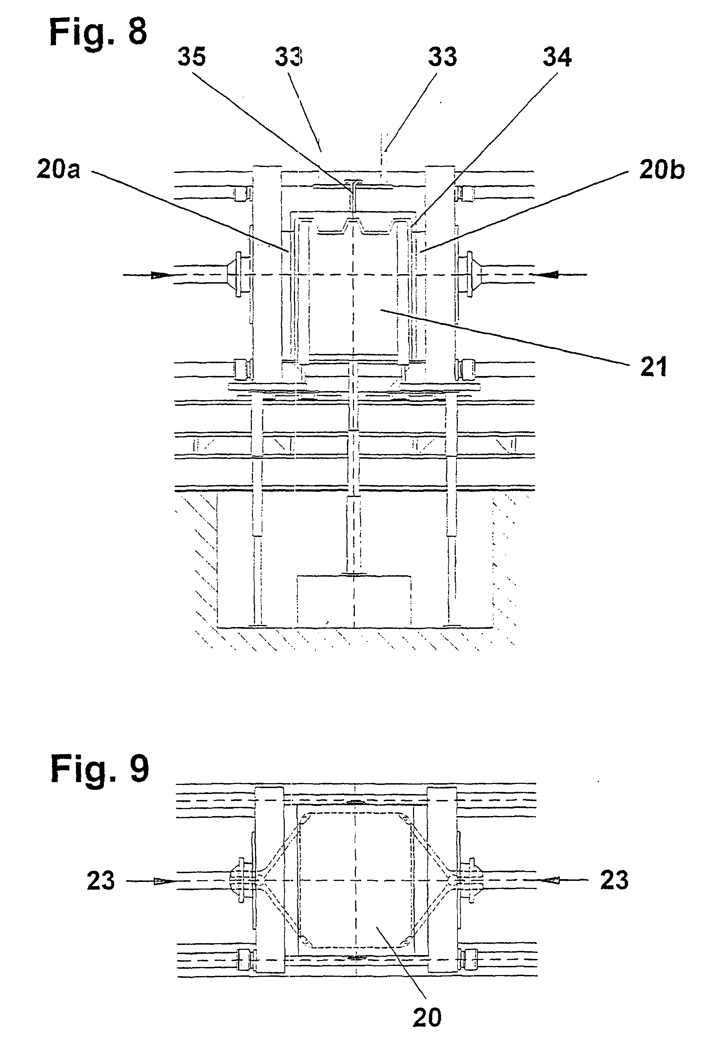

Die anhand der Fig. 1 erläuterte Vorrichtung 6 wird mit einer Anlage hergestellt, wie sie in den Fig. 2 bis 9 in vereinfachter Weise und in unterschiedlichen Betriebsstellungen dargestellt ist. Diese Anlage, die unterhalb eines Extruders angeordnet ist, besteht zunächst aus einer Form 20 (Fig. 9) die aus zwei Formhälften 20a, 20b und einem Formkern 21 gebildet ist. Dabei wird jede Formhälfte 20a, 20b von einem Formträger 22a, 22b aufgenommen, die in an sich bekannter Weise mittels eines nicht dargestellten Antriebes in Richtung der Pfeile 23 aus ihrer Lage gemäß Fig. 2 in die in Fig. 8 gezeigte Stellung bewegbar bzw. verschiebbar sind. Der Formkern 21 befindet sich unterhalb der Bewegungsebene der Formhälften 20a, 20b und kann über einen Antrieb 24 aus seiner Lage gemäß Fig. 2 in die Stellung gemäß Fig. 7 angehoben werden.

Jede Formhälfte 20a, 20b besitzt ein aufklappbares Oberteil 25 (Fig. 2) und zwei aufklappbare Seitenteile 26 (Fig. 3), die hier in ihrer jeweiligen Ausgangslage bzw. Grundstellung gezeichnet sind. Über an sich bekannte, in der Zeichnung nicht dargestellte Antriebe können sowohl die Oberteile 25 als auch die Seitenteile 26 in ihre Lage gemäß den Fig. 8 und 9 geschwenkt werden.

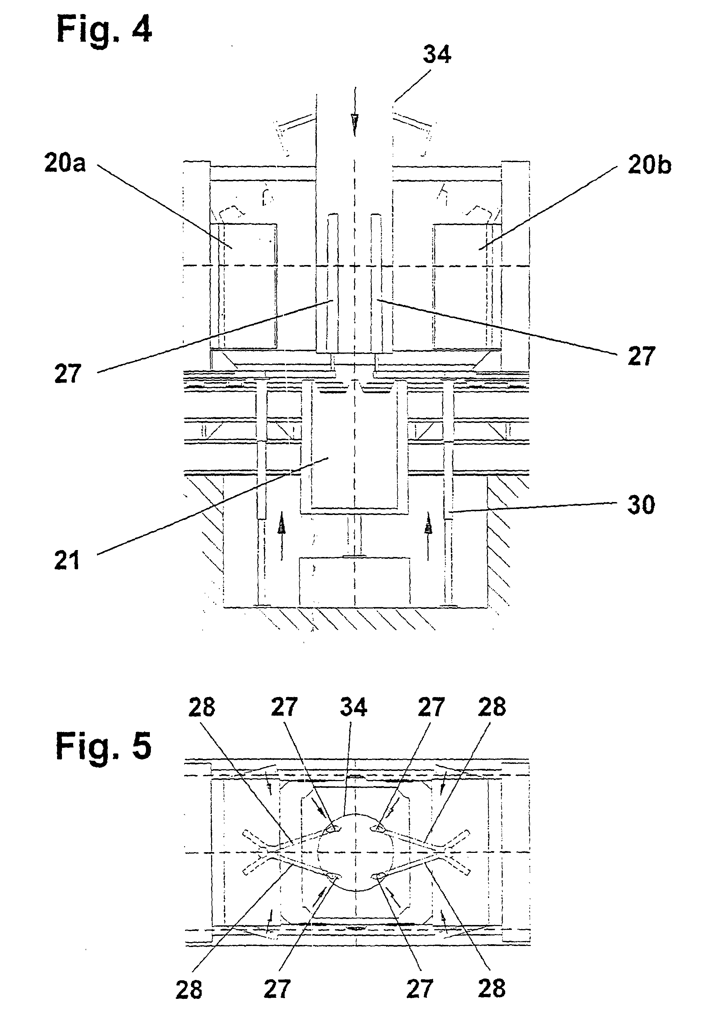

In allen vier Ecken des einen annähernd rechteckigen Querschnitt aufweisenden Formkernes 21 ist jeweils ein Spreizlement 27 vorgesehen, die jeweils den Querschnitt des Formkernes 21 ergänzen, jedoch getrennt von demselben bewegbar sind. Jedes Spreizelement 27 wird von einem Schwenkhebel 28 getragen, der unterhalb des Formkernes 21 um eine Achse 29 schwenkbar ist. Wie die Fig. 3 erkennen läßt, sind jeweils zwei benachbarte Schwenkhebel 28 mit ihren Spreizelementen 27 einer gemeinsamen Schwenkachse 29 zugeordnet. Für die Bewegung der Schwenkhebel 28 und damit der Spreizelemente 27 sind denselben an sich bekannte, in der Zeichnung jedoch nicht dargestellte Antriebe zugeordnet, durch die die Schwenkhebel 28 und damit die Spreizelemente 27 aus ihrer Lage gemäß Fig. 3 in die Stellung gemäß Fig. 5 und zurück bewegt werden können. Zusätzlich ist jeder Achse 29, um die jeweils zwei Schwenkhebel 29 geschwenkt werden können, ein Hubantrieb 30 zugeordnet, über den die Schwenkhebel 29 und damit die Spreizelemente 27 aus ihrer Stellung gemäß Fig. 2 in die Lage gemäß Fig. 4 angehoben werden können. Die Hubantriebe 30 und der Hubantrieb 24 sind beispielsweise in einer Ausnehmung 31 eines Fundamentes 32 untergebracht.

Schließlich befinden sich noch oberhalb der Form 20 zwei Klemmelemente 33, die durch nicht dargestellte Antriebe aus ihrer Lage gemäß Fig. 2 in die Stellung gemäß Fig. 6 geschwenkt werden können. Die Schwenkachsen dieser Klemmelemente 33 sind in der Zeichnung nicht dargestellt.

Bei der Herstellung einer erfindungsgemäßen Vorrichtung 6 wird nun davon ausgegangen, daß alle Teile der Anlage ihre in den Fig. 2 und 3 dargestellte Position einnehmen. Jetzt werden zunächst die vier Spreizelemente 27 über ihre Hubantriebe 30 aus ihrer Lage gemäß der Fig. 2 angehoben und zwar so weit, daß sie sich zwischen den beiden Formhälften 20a, 20b befinden, wie dies die Fig. 4 erkennen läßt. Dies bedeutet, daß die Spreizelemente 27 ihre Lage am Formkern 21 verlassen, der seine untere Lage (Fig. 4) beibehält. Sobald sich die die Spreizelemente 27 tragenden Schwenkhebel 28 oberhalb des Formkernes 21 in der gezeichneten Höhenlage gemäß Fig. 4 befinden, werden deren Antriebe angeschaltet und damit die Spreizelemente 27 so weit gegeneinander geschwenkt, bis sie ihre in Fig. 5 deutlich erkennbare Lage einnehmen. Auch in der Fig. 4 der Zeichnung sind die Spreizelemente 27 in dieser Lage gezeichnet. Nun wird der Anlage von oben, also von dem bereits erwähnten Extruder, ein schlauchartiger Vorformling 34 zugeführt, der im dargestellten Ausführungsbeispiel einen kreisringförmigen Querschnitt besitzt, wie dies die Fig. 5 erkennen läßt. Dieser Vorformling 34 besitzt bereits eine aus drei Schichten bestehende Wandung 10, wie sie bereits anhand der Fig. 1a erläutert wurde. Der Vorformling 34 besitzt also bereits eine Außenschicht 11 und eine Innenschicht 12 aus kompaktem Kunststoff, wobei die Kunststoffe dieser beiden Schichten 11, 12 gleich oder unterschiedlich sein kann. Es ist vorteilhaft, für die Außenschicht 11 einen eingefärbten, UV-beständigen Kunststoff, beispielsweise Polyethylen zu verwenden, während die Innenschicht 12 aus nicht eingefärbtem Kunststoff, beispielsweise Polyethylen besteht. Die Zwischenschicht 13 besteht aus einem aufschäumbaren Kunststoff, beispielsweise Polyethylen, dem in vorteilhafter Weise ein Schäumverzögerungsmittel zugesetzt bzw. zudosiert wurde, welches sicherstellt, daß die Zwischenschicht 13 der Wandung 10 des Vorformlings 34 zunächst nicht bzw. nicht in nennenswertem Maße aufschäumt.

Der Vorformling 34 wird nun in einer vorgegebenen und in der Fig. 4 erkennbaren Länge in die geöffntete Form 20 und damit zwischen die beiden Formhälften 20a, 20b extrudiert. Dabei werden die vier Spreizelemente 27 von dem schlauchartigen Vorformling 34 umschlossen. Sobald der Vorformling 34 die geforderte Endlage in der Form 20 erreicht hat, wird derselbe über die Klemmelemente 33 zusammengequetscht, wie dies die Fig. 6 der Zeichnung erkennen läßt. Damit kann sich die extrudierte Länge des Vorformlings 34 nicht mehr verändern. Jetzt werden die Spreizelemente 27 wieder in ihre Ausgangslage gemäß der Fig. 3 zurückbewegt, wobei sie allerdings ihre obere Stellung zwischen den beiden Formhälften 20a, 20b und damit innerhalb des Vorformlings 34 beibehalten. Bei dieser Bewegung der Spreizelemente 27 wird der Vorformling 34, wie in Fig. 6 zu erkennen, aufgeweitet. Dabei werden die Klemmelemente 33 um ein vorgegebenes Maß in die in Fig. 7 dargestellte Lage abgesenkt. Die Aufweitung erfolgt dabei um ein solches Maß, daß jetzt der noch unterhalb des Vorformlings 34 befindliche Formkern 21 über seinen Antrieb 24 angehoben und in den Vorformling 34 eingeführt werden kann. Wenn der Formkern 21 seine obere Endlage gemäß Fig. 7 eingenommen hat, liegen die Spreizelemente 27 wieder an dem Formkern 21 an und bilden zusammen mit demselben den sogenannten inneren Formkörper. Jetzt kann die Form 20 geschlossen werden. Dazu werden zunächst die beiden Formhälften 20a, 20b in ihre Schließstellung gemäß Fig. 8 bewegt. Sodann werden die beiden Oberteile 25 und die vier Seitenteile 26 ebenfalls in ihre Schließstellung bewegt, wie dies die Fig. 9 erkennen läßt. Bei diesen Bewegungen wird der Vorformling 34 von einem zwischen den Klemmelementen 33 befindlichen Butzen 35 abgetrennt. Jetzt befindet sich der Vorformling 34 ausschließlich in einem Formhohlraum, der innen von dem Formkern 21 mit den Spreizelementen 27 und außen von den Formhälften 20a, 20b mit den Oberteilen 25 und den Seitenteilen 26 begrenzt ist. Jetzt kann der Schäumvorgang der schäumfähigen Zwischenschicht 13 einsetzen bzw. eingeleitet werden. Durch diesen Schäumvorgang werden die äußere Schicht 11 und die innere Schicht 12, die aus kompaktem Kunststoff bestehen, an der Wandung des Formhohlraumes zum Anliegen gebracht. Die innere Schicht 12 kommt dabei an dem Formkern 21 und den Spreizelementen 27 zum Anliegen, während sich die Außenschicht 11 an den Formhälften 20a, 20b mit den Oberteilen 25 und den Seitenteilen 26 anlegt. Durch eine solche Ausgestaltung der Anlage und die beschriebene Verfahrensweise ist sichergestellt, daß die Wandung 10 der fertigen Vorrichtung 6 immer eine genau vorgegebene Wandstärke aufweist. Um das Anlegen der Außenschicht 11 und der Innenschicht 12 an der Wandung des sogenannten Formhohlraumes zu erleichtern und zu beschleunigen, ist es möglich, den Formhohlraum mit Vakuum zu beaufschlagen. Dazu können im Formkern 21 und in den Formhälften 20a, 20b mit den Oberteilen 25 und den Seitenteilen 26 entsprechende und allgemein bekannte Entlüftungsöffnungen eingearbeitet sein. Durch entsprechende Ausgestaltung der Seitenteile 26 kann die Ausnehmung 14 gleichzeitig mit dem Schließen der Form 20 hergestellt werden.

Sobald die auf diese Weise aus dem Vorformling 34 hergestellte Vorrichtung 6 ausreichend abgekühlt ist - bedarfsweise können der Formkern 21 und die Formhälften 20a, 20b mit den Oberteilen 25 und den Seitenteilen 26 gekühlt werden - kann die Form 20 geöffnet und die fertige Vorrichtung 6 entnommen werden. Dabei werden zunächst die Oberteile 25 und die Seitenteile 26 wieder in ihre Ausgangslage gemäß den Fig. 2 und 3 geschwenkt. Sodann werden die beiden Formhälften 20a, 20b ebenfalls wieder in ihre Ausgangslage gemäß Fig. 2 zurückbewegt. Jetzt befindet sich die fertige Vorrichtung 6 nur noch auf dem Formkern 21 mit den Spreizelementen 27. Jetzt kann die untere Kante der fertigen Vorrichtung 6, beispielsweise mittels einer umlaufenden Anschlagleiste, festgehalten und der Formkern 21 zusammen mit den Spreizelementen 27 wieder in seine untere Ausgangslage gemäß Fig. 2 zurückbewegt werden. Die Vorrichtung 6 ist nun vollkommen frei und kann aus der Anlage entfernt werden.

Um unterschiedliche Dichten der geschäumten Zwischenschicht 13 zu erhalten, ist es möglich, die Dicke der einzelnen Schichten 11,12,13 der Wandung 10 des Vorformlings 34 während der Extrusion unterschiedlich auszubilden, wie dies in den Fig. 10b und 10c gezeigt ist. Die Fig. 10b zeigt die Wandung 10 eines schlauchartigen Vorformlings 34, bei dem die Zwischenschicht 13 sowie die Außenschicht 11 und die Innenschicht 12 über einen vorgegebenen Weg ihrer Länge dicker extrudiert sind. Die Wandung der fertigen Vorrichtung 1 ist dann gemäß der Fig. 10d ausgebildet. Hier weist die Zwischenschicht 13 eine Einschnürung auf, in deren Bereich sie stärker verdichtet ist.

Im Gegensatz dazu zeigt die Fig. 10c die Wandung 10 eines schlauchartigen Vorformlings 34, bei dem die Zwischenschicht 13 sowie die Außenschicht 11 und die Innenschicht 12 über einen vorgegebenen Weg ihrer Länge dünner extrudiert sind. Dadurch wird erreicht, daß die Zwischenschicht 13 in der geschlossenen Form 20 bei vorgegebener Dicke der Wandung 10 stärker aufschäumen kann, wie dies die Fig. 10e erkennen läßt, in der die Wandung 10 der fertigen Vorrichtung 1 gezeigt ist.

Ferner ist es möglich, die Vorrichtung 6 im Bereich ihres Mantelkörpers 8 mit einem senkrecht verlaufenden Sichtstreifen 12a auszubilden, wie dies in der Fig. 1b dargestellt ist. Dies kann beispielsweise in der Weise erfolgen, daß bei der Extrusion des Vorformlings 34 in demselben ein schmaler Längsstreifen aus durchscheinendem Kunststoff mit extrudiert wird. Falls die Innenschicht 12 aus durchscheinendem, also nicht eingefärbtem Kunststoff besteht, ist es möglich, diesen Sichtstreifen 12a aus dem Werkstoff der Innenschicht 12 herzustellen, wie dies in Fig. 10f angedeutet ist. Ein Sichtstreifen in dem Mantelkörper 8 gibt die Möglichkeit, den Füllungsgrad des Behälters 2 zu erkennen. Dies setzt allerdings voraus, daß der Behälter 2 entweder aus durchscheinendem Kunststoff besteht oder ebenfalls einen Sichtstreifen aufweist, der jedoch mit dem Sichtstreifen des Mantelkörpers 8 fluchten muß.

## Patentansprüche

1. Vorrichtung zum Schutz eines großvolumigen Behälters während der Lagerung und des Transportes von flüssigen, zähfließenden, pulverigen und körnigen Füllstoffen, bestehend aus einem palettenartigen, den Behälter an seiner Unterseite abstützenden Tragkörper und einem mit dem Tragkörper verbundenen und den Behälter seitlich umschließenden Mantelkörper,
**dadurch gekennzeichnet**,
daß der Tragkörper (7) und der Mantelkörper (8) einstükkig aus Kunststoff mit einer dreischichtigen, aus einer kompakten Außenschicht (11), einer kompakten Innenschicht (12) und einer geschäumten Zwischenschicht (13) bestehenden Wandung (10) gebildet sind.

2. Vorrichtung nach Anspruch 1,
**dadurch gekennzeichnet**,
daß der Mantelkörper (8) mit einem senkrecht verlaufenden Sichtstreifen (12a) versehen ist.

3. Vorrichtung nach Anspruch 1 oder 2,
**dadurch gekennzeichnet**,
daß die Innenschicht (12) aus durchscheinendem Kunststoff besteht und der Sichtstreifen (12a) aus dem Werkstoff der Innenschicht (12) gebildet ist.

4. Vorrichtung nach mindestens einem der Ansprüche 1 bis 3,
**dadurch gekennzeichnet**,
daß die Außenschicht (11) aus einem UV-beständigen, eingefärbten Kunststoff gebildet ist.

5. Vorrichtung nach mindestens einem der Ansprüche 1 bis 4,
**dadurch gekennzeichnet**,
daß die Innenschicht (12) und die Außenschicht (11) unterschiedliche Wandstärken aufweisen und die Zwischenschicht (13) in diesen Bereichen eine unterschiedliche Dichte besitzt.

6. Verfahren zur Herstellung einer Vorrichtung nach mindestens einem der Ansprüche 1 bis 5, bei dem ein schlauchartiger Vorformling mit einer dreichichtigen Wandung aus Kunststoff in einer vorgegebenen Länge in eine geöffnete Form extrudiert und dann verformt wird,
**dadurch gekennzeichnet**,
daß der Vorformling mit einer Wandung aus einer kompakten Außenschicht, einer kompakten Innenschicht und einer aufschäumbaren Zwischenschicht über mindestens drei stabartige, senkrecht angeordnete Spreizelemente extrudiert und
der Vorformling durch entsprechendes Auseinanderbewegen der Spreizelemente um ein vorgegebenes Maß aufgeweitet wird, daß von unten in den aufgeweiteten Vorformling ein zusammen mit der schließbaren Form einen Formraum begrenzender Formkern eingeführt und die Form geschlossen wird und daß die kompakte Innenschicht und die kompakte Außenschicht der Wandung des Vorformlings unter Aufschäumung der Zwischenschicht an der Wandung des Formhohlraumes zum Anliegen gebracht werden.

7. Verfahren nach Anspruch 6,
**dadurch gekennzeichnet**,
daß die Spreizelemente von unten in den extrudierten Vorformling bewegt werden.

8. Verfahren nach Anspruch 6 oder 7,
**dadurch gekennzeichnet**,
daß von der Form und/oder von dem Formkern aus der Formhohlraum mit Vakuum beaufschlagt wird.

9. Verfahren nach mindestens einem der Ansprüche 6 oder 8,
**dadurch gekennzeichnet**,
daß der Formkern und/oder die Form mit einem Kühlmedium beaufschlagt werden.

10. Verfahren nach mindestens einem der Ansprüche 6 bis 9.
**dadurch gekennzeichnet**,
daß die Spreizelemente während des Formvorganges einen Teil des Formkerns bilden.

11. Verfahren nach mindestens einem der Ansprüche 6 bis 10,
**dadurch gekennzeichnet**,
daß der Vorformling mit einem Sichtstreifen extrudiert wird.

## Claims

1. Device for the protection of a large-volume container during the storage and transport of liquid, viscous, powdered and granular filling materials, consisting of a pallet-like support body supporting the container on its underside and a casing body connected to the support body and enclosing the container laterally,
**characterised in that**
the support body (7) and the casing body (8) are formed in one piece from plastic having a three-layered wall (10) consisting of a compact outer layer (11), a compact inner layer (12) and a foamed intermediate layer (13).

2. Device according to Claim 1, **characterised in that** the casing body (8) is provided with an inspection strip (12a) running vertically.

3. Device according to Claim 1 or 2, **characterised in that** the inner layer (12) consists of a translucent plastic and the inspection strip (12a) is formed from the material of the inner layer (12).

4. Device according to at least one of Claims 1 to 3,
**characterised in that** the outer layer (11) is formed from a UV-resistant, coloured plastic.

5. Device according to at least one of Claims 1 to 4,
**characterised in that** the inner layer (12) and the outer layer (11) have differing wall thicknesses and the intermediate layer (13) has a different density in these regions.

6. Method for the production of a device according to at least one of Claims 1 to 5 in which a hose-like parison having a three-layered wall made of plastic is extruded to a specified length in an open mould and is then deformed,
**characterised in that** the parison having a wall composed of a compact outer layer, a compact inner layer and a foam expandable intermediate layer is extruded through three rod-like, vertically arranged expansion members and the parison is widened by a specified amount by correspondingly moving the expansion members apart, that into the widened parison a mould core forming together with the closable mould a moulding space is introduced from below and the mould is closed and that the compact inner layer and the compact outer layer of the wall of the parison are brought into contact with the walls of the moulding cavity while expanding the intermediate layer.

7. Method according to Claim 6, **characterised in that** the expansion members are moved from beneath into the extruded parison.

8. Method according to Claim 6 or 7, **characterised in that** the moulding cavity has vacuum applied to it from the mould and/or from the mould core.

9. Method according to at least one of Claims 6 or 8,
**characterised in that** the mould core and/or the mould is acted upon by a cooling medium.

10. Method according to at least one of Claims 6 to 9,
**characterised in that** during the moulding operation the expansion members form part of the mould core.

11. Method according to at least one of Claims 6 to 10,
**characterised in that** the parison is extruded with an inspection strip.

## Revendications

1. Dispositif pour protéger un récipient de grande contenance pendant le stockage et le transport de substances liquides, visqueuses, pulvérulentes et granuleuses, constitué par un corps de support en forme de palette, qui supporte le récipient au niveau de sa face inférieure, et un corps formant enveloppe, qui est relié au corps de support et enveloppe latéralement le récipient, **caractérisé en ce que** le corps de support (7) et le corps formant enveloppe (8) sont réalisés d'un seul tenant en matière plastique avec une paroi (10) à trois couches constituées par une couche extérieure compacte (11), une couche intérieure compacte (12) et une couche intercalaire à l'état de mousse (13).

2. Dispositif selon la revendication 1, **caractérisé en ce que** le corps enveloppe (8) est pourvu d'une bande de visualisation (12a) qui s'étend verticalement.

3. Dispositif selon la revendication 1 ou 2, **caractérisé en ce que** la couche intérieure (12) est constituée par une matière plastique transparente et que la bande de visualisation (12a) est formée par le matériau de la couche intérieure (12).

4. Dispositif selon au moins l'une des revendications 1 à 3, **caractérisé en ce que** la couche extérieure (11) est formée par une matière plastique colorée, résistante aux ultraviolets.

5. Dispositif selon au moins l'une des revendications 1 à 4, **caractérisé en ce que** la couche intérieure (12) et la couche extérieure (11) possèdent des épaisseurs de paroi différentes et que la couche intermédiaire (13) possède, dans ces zones, une densité différente.

6. Procédé pour fabriquer un dispositif selon au moins l'une des revendications 1 à 5, selon lequel on extrude une préforme en forme de tuyau comportant une paroi constituée de trois couches et réalisée en une matière plastique, avec une longueur prédéterminée et une forme ouverte, et on la déforme, **caractérisé en ce qu**'on extrude la préforme avec une paroi constituée par une couche extérieure compacte, une couche intérieure compacte et une couche intermédiaire pouvant être amenée à l'état de mousse, sur au moins trois éléments d'écartement en forme de tiges disposés verticalement, et qu'on élargit la préforme au moyen d'un écartement correspondant, à un degré prédéterminé, des éléments d'écartement, on introduit à partir du bas, dans la préforme élargie, un noyau de moule limitant, conjointement avec le moule pouvant être fermé, un espace de moule, et on ferme le moule, et qu'on applique la couche intérieure compacte et la couche extérieure compacte de la paroi de la préforme contre la paroi de la cavité de moule, en faisant mousser la couche intermédiaire.

7. Procédé selon la revendication 6, **caractérisé en ce qu**'on introduit les éléments d'écartement à partir du bas dans la préforme extrudée.

8. Procédé selon la revendication 6 ou 7, **caractérisé en ce qu**'on charge par une dépression la cavité de moule à partir du moule et/ou du noyau de moule.

9. Procédé selon au moins l'une des revendications 6 ou 8, **caractérisé en ce qu**'on charge le noyau de moule et/ou le moule avec un milieu de refroidissement.

10. Procédé selon au moins l'une des revendications 6 à 9, **caractérisé en ce que** les éléments d'écartement forment, pendant le processus de moulage, une partie du noyau de moule.

11. Procédé selon au moins l'une des revendications 6 à 10, **caractérisé en ce qu**'on extrude la préforme conjointement avec une bande de visualisation.
